# EUROPÄISCHE PATENTSCHRIFT

(11) **EP 0 706 619 B1**
(45) Veröffentlichungstag und Bekanntmachung des Hinweises auf die Patenterteilung: **15.03.2000**
(21) Anmeldenummer: 94912466.3
(22) Anmeldetag: 18.04.1994
(51) Int. Cl.: F16D 69/02, F16D 65/12

(54) **BREMSSCHEIBE FÜR SCHEIBENBREMSEN**
BRAKE DISC FOR DISC BRAKES
DISQUE DE FREIN POUR FREINS A DISQUE

(30) Priorität: 02.07.1993 DE 4322113
(43) Veröffentlichungstag der Anmeldung: 17.04.1996
(73) Patentinhaber: KNORR-BREMSE AG, 80809 München (DE)
(72) Erfinder: WIRTH, Xaver, D-85737 Ismaning (DE)
(86) Internationale Anmeldenummer: DE9400426
(87) Internationale Veröffentlichungsnummer: WO9501520

(56) Entgegenhaltungen:
- EP-A- 0 419 684
- EP-A- 0 554 683
- WO-A-89/00252
- DE-A- 4 107 416
- FR-A- 1 179 633
- GB-A- 789 987
- GB-A- 944 578
- US-A- 2 215 572
- US-A- 4 290 510
- PATENT ABSTRACTS OF JAPAN vol. 8, no. 274 (M-345) 14. Dezember 1984 & JP,A,59 144 831 (ITOU KOGYO) 20. August 1984
- PATENT ABSTRACTS OF JAPAN vol. 9, no. 249 (M-419) 5. Oktober 1985 & JP,A,60 101 331 (SUMITOMO) 5. Juni 1985
- PATENT ABSTRACTS OF JAPAN vol. 8, no. 240 (M-336) 6. November 1984 & JP,A,59 120 356 (HITACHI) 11. Juli 1984

## Beschreibung

Die Erfindung bezieht sich auf eine Bremsscheibe für Scheibenbremsen, insbesondere eine Achs- oder Radbremsscheibe von Schienenfahrzeugen, mit einem ringförmigen Tragkörper, auf welchem sich ein- oder beidseitig eine einen Keramikwerkstoff aufweisende ringförmige Schicht befindet, deren äußere Ringfläche eine Reibringfläche für wenigstens eine Bremsbacke bildet. Die Erfindung betrifft weiterhin Verfahren zur Herstellung vorgenannter Bremsscheiben.

Eine derartige Bremsscheibe mit einem metallischen Tragkörper ist aus der WO 91/10840 bekannt. Nach dieser Druckschrift soll ein aus Grauguß bestehender Tragkörper im Bereich der Reibringflächen beispielsweise durch beschleunigte Abkühlung nach dem Gießvorgeng eine gehärtete Oberflächenzone aufweisen, deren Tiefe 1-1, 5mm betragen und ein Zementit-, Perlit- oder Martensitgefüge aufweisen kann. Auf diese gehärtete Oberfläche soll sodann durch ein Atomsprühverfahren, d.h. ein Zerstäuben einer Schmelze mittels eines inerten Hochdruckgases, oder einem Reibschweißverfahren eine dünne Schicht aus einem Material sehr großer Härte und Verschleißfestigkeit aufgebracht werden, die Dicke dieser Schicht soll im Bereich von 75-100 um liegen. Die Schmelze und das aufzuschweißende Material sollen im wesentlichen Aluminiumoxyd enthalten, was den Keramikwerkstoffen zuzurechnen ist. Die aufbringbare Schicht ist hierbei wesentlich dünner als die Verschleißstärke bei bisherigen Bremsscheiben, die etwa 5-10mm beträgt; es kann somit keine optimale Standzeit derartig. beschichteter Bremsscheiben, wie sie sich bei einer der bisher üblichen Verschleißstärke entsprechenden Dicke der Beschichtung ergäbe, erreicht werden. Die Aufbringverfahren der Beshichtung sind zudem sehr teuer und aufwendig. Beim Atomsprühverfahren besteht außerdem die Schwierigkeit, die keramischen Partikel im Schmelzen-Grundmaterial in gleichförmiger Verteilung zu halten, da sehr große Dichteunterschiede zwischen diesen Materialien bestehen, welche zu Absetzvorgängen mit entsprechend über der Zeit sich ändernden Sprühmaterial-Zusammensetzungen mit entsprechender, unerwünschter Beschichtungsmaterial-Zusammensetzungs-Änderung führen kann. Schließlich neigen derartig aufgebrachte Beschichtungen bei energiereichen Bremsungen, bei welchen die Bremscheibe hoch beansprucht wird und entsprechend starke Temperaturänderungen erfährt, zum Abplatzen von dem Tragkörper.

Es ist Aufgabe der Erfindung, eine Bremsscheibe der eingangs genannten Art mit einfachen Mitteln derart auszubilden, daß sie auch für energiereiche Bremsungen geeignet ist, zudem einfach herstellbar ist und eine zum Erreichen optimal hoher Standzeiten geeignete Gestal tung erlaubt. Weiterhin ist es Aufgabe der Erfindung ein Verfahren zur Herstellung einer derartigen Bremsscheibe anzugeben, welches bei einfachen kostengünstigen Verfahren einen temperaturbeständigen Verbund zwischen Tragkörper und Reibringfläche gewährleistet.

Die Aufgabe wird nach der Erfindung dadurch gelöst, daß die Schicht aus mikro- oder makroskopisch aufgegliederten Bereichen aus wenigstens zwei unterschiedlichen Werkstoffen gebildet ist, wobei die Bereiche des einen Werkstoffes aus einem zumindest annähernd reinen Keramikwerkstoff und die Bereiche des bzw. der anderen Werkstoffes bzw. Werkstoffe aus einem Metall-, Metallsinter- oder Metallkeramiksinter-Werkstoff bestehen.

Die Aufgabe bezüglich des Hersteilverfahrens wird in vorteilhafter Weise durch die Merkmale der Ansprüche 26, 27, 29 und 30 gelöst.

Weitere, für eine derartige Bremsscheibe bzw. Hersteilverfahren vorteilhafte und zweckmäßige Ausbildungsmöglichkeiten nach der Erfindung sind in den Unteransprüchen angegeben.

In der Zeichnung sind Ausführungsbeispiele für nach der Erfindung ausgebildete und hergestellte Bremsscheiben dargestellt, und zwar zeigt
- Fig. 1: ein Schnittbild durch eine das Grundprinzip der erfindungsgemäßen Bremsscheiben zeigende Bremsscheibe, und
- Fig. 2 bis 12: Teilschnittbilder unterschiedlich ausgebildeter Bremsscheiben in unterschiedlichen Maßstäben.

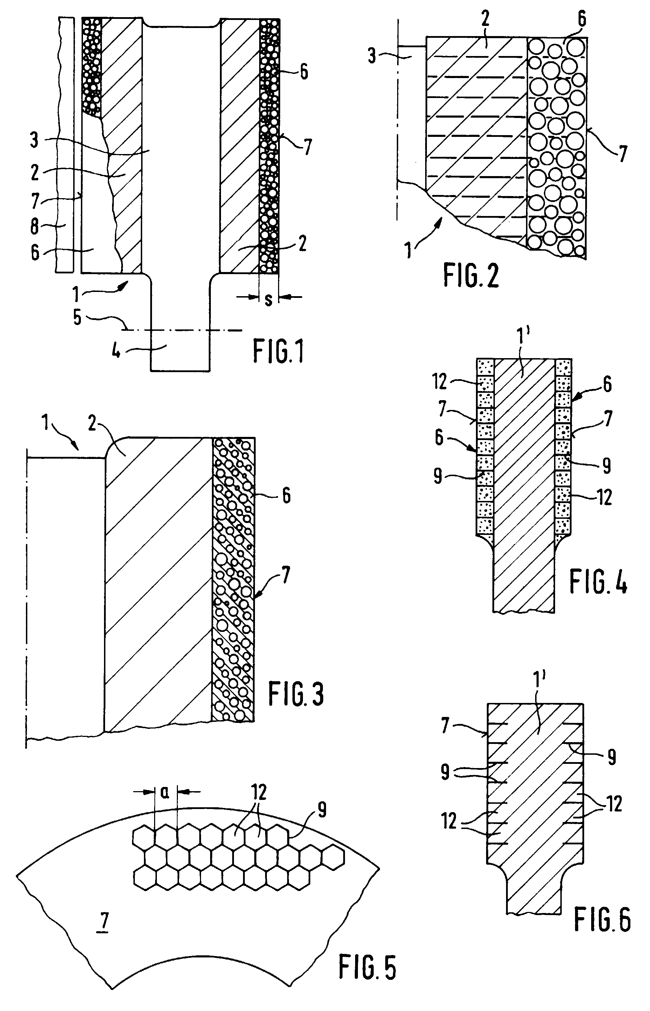

Die Fig. 1 zeigt einen Axial schnitt durch eine Bremsscheibe mit einem Tragkörper 1, der vorzugsweise aus einem üblichen Stahl-, Gußeisen- oder Aluminiumwerkstoff besteht; als Gußeisen kann insbesondere Grauguß oder Gußeisen mit Kugelgraphit vorgesehen sein. Der Tragkörper 1 weist zwei axial versetzte Ringabschnitte 2 auf, die durch radiale Ventilationsrippen 3 miteinander verbunden sind. Die Ventilationsrippen können abweichend auch als Rundstege ausgebildet sein, welche die Ringabschnitte verbinden. Die Ventilationsrippen 3 sind nach radialinnen zu Haltestegen 4 verlängert, die mittels nur strichpunktiert angedeuteter Verschraubungen 5 mit einem nicht dargestellten Nabenkörper verbunden sind. Der Tragkörper 1 weist somit die typische Form einer innenbelüfteten Achsbremsscheibe eines Schienenfahrzeuges auf. Außenseitig ist auf die Ringabschnitte 2 je eine ringförmige Schicht 6 aufgebracht, welche in später genauer zu erläuternder Weise aus mikro- oder makroskopisch aufgegliederten Bereichen aus wenigstens zwei unterschiedlichen Werkstoffen gebildet sind, wobei die Bereiche des einen Werkstoffes aus einem zumindest annähernd reinen Keramikwerkstoff und die Bereiche des bzw. der anderen Werkstoffes bzw. Werkstoffe aus einem Metall-, Metallsinter- oder Metallkeramiksinter-Werkstoff bestehen. Der Keramikwerkstoff bzw. -stoffanteil weist vorzugsweise Siliziumkarbid (SiC) auf, im Metallkeramiksinterwerkstoff beträgt dessen Anteil bevorzugt mehr als 10%. Außenseitig, dem Ringabschnitt 2 abgewandt, tragen die Schichten 6 je eine Ringfläche, welche Reibringflächen 7 bilden, an welche Bremsbacken 8 der Scheibenbremse anpreßbar sind; in Fig. 1 ist nur die linksseitige Bremsbacke 8 teilweise dargestellt. Die axiale Stärke s bzw. Dicke der Schichten 6 übersteigt jeweils geringfügig die übliche Verschleißstärke je Reibringfläche einer üblichen Bremsscheibe oder ist dieser gleich, die Stärke s liegt vorzugsweise im Bereich zwischen ca. 5 bis 10mm. Die Dicken- bzw. Stärkenkorrelation der Ringabschnitte 2 und Schichten 6 ist zweckmäßig auch beanspruchungsabhängig, insbesondere in Abhängigkeit von auftretenden Flieh-, Zuspann- und aus dem Bremsmoment resultierenden Schubkräften, zu bestimmen.

Die Fig 2 zeigt in vergrößertem Maßstab einen Ausschnitt aus Fig. 1, es sind entsprechende Bezugszahlen eingetragen. Die Schicht 6 besteht bei der Ausführungsform nach Fig. 2 aus einem offenporigen Keramikschwamm, dessen Poren mit einem Metall ausgefüllt sind. Offenporige Keramikschwämme sind bekannt, sie werden zu verschiedenen Zwecken, beispielsweise als Gußfilter genutzt, sie können aus irgendwelchen, geeigneten Keramikwerstoffen, bevorzugt aus Siliziumkarbid der Formel SiC bestehen, ihrer Vorteile sind insbesondere die hohe Temperaturbeständigkeit bis über 1500°C, ihre extrem hohe Verschleißfestigkeit und die geringe Streuung ihrer Reibwerte über große Temperaturbereiche. Die offenporige Keramikschwammstruktur bewirkt ihrerseits in dem von ihr durchsetzten Metall eine kontrollierte Rißstruktur bis zu einer definierten und beeinflußbaren Tiefe. Die Porengröße des Keramikschwammes kann relativ groß, bis in den Bereich des Abstandsmaßes von Haarrissen in einer keramikfreien Eisengußscheibenoberfläche von ca 5-10mm gewählt werden.

Die Metallfüllung des Keramikschwammes der Schicht 6 nach Fig. 2 dient der Wärmeableitung von der Reibringfläche 7 zum Ringabschnitt 7 und damit dem Tragkörper 1, aber auch der Wärmespeicherung und der Stabilisierung des Keramikschwammes, der alleine sehr spröde und damit bruchgefärdet wäre. Die Metallfüllung kann aus dem gleichen Metall bestehen, welches den Tragkörper 1 bildet: Es kann insbesondere wie üblich ein Stahl-, Gußeisen-, vorzugsweise Kugelgraphit aufweisender Gußeisen-, ein Grauguß- oder ein Aluminium-Werkstoff sein gemäß den Bezeichnungen St, GG, GGG, Al.

Die Herstellung der Bremsscheibe ist hierbei besonders einfach: In eine um die Stärke der Schichten 6 erweiterte Gießform für den Tragkörper 1 werden vor dem Gießvorgang je Reibringfläche ein aus offenporigem Keramikschwamm gebildeter, ein- oder mehrteiliger Ringkörper eingelegt, dessen Poren sich beim Gießvorgang des Tragkörpers 1 mit dessen Metall füllen.

Es ist jedoch auch möglich, für die Metallfüllung des Keramikschwammes einen anderen Metallwerstoff als für den Tragkörper 1 vorzusehen, beispielsweise einen Metallwerkstoff mit besserer Wärmeleitfähigkeit durch beispielsweise einen Kupferanteil, mit besserer Wärmebeständigkeit oder besserem Reib- bzw. Verschweißverhalten. Zur Fertigung einer derartigen Bremsscheibe ist in die wie vorstehend erläutert erweiterte Gießform für den Tragkörper 1 je Reibringfläche ein Ringkörper aus metallgefülltem Keramikschwamm einzulegen, der beim nachfolgenden Gießvorgang des Tragkörpers 1 in diesen eingegossen wird.

Bei mehrteiliger Ausbildung der Keramikschwamm-Ringkörper sind dessen Teile möglichst gleichartig auszubilden.

Abweichend zu diesen Ausführungsformen können der Tragkörper und die Schicht auch aus dem gleichen Werkstoff gefertigt sein, insbesondere können beide aus einem offenporigen Keramikschwamm mit Metallfüllung bestehen. Eine derartige Bremsscheibe kann insbesondere unbelüftet ausgebildet sein, ihr Schnittbild wäre durchgehend mit dem in Fig.2 für die Schicht 6 dargestellten Werkstoff auszufüllen. Solche Bremsscheiben sind für besonders hohe Temperaturen geeignet, ihr Durchmesser sollte relativ klein gehalten werden.

Gemäß der eine ähnliche Darstellung wie Fig. 1 zeigenden Fig. 3 kann die Schicht 6 aus einer Metallsinterschicht mit eingelagerten Keramikpartikeln bestehen, die vorzugsweise auf den Tragkörper 1 aufgesintert ist. Dabei ist wesentlich, daß im vor dem Sintervorgang auf die Ringabschnitte 2 aufzubringenden Sinterpulver keine durch Dichteunterschiede der einzelnen Materialien bedingte Entmischungsvorgänge zu befürchten sind, es kann also ohne Schwierigkeiten eine Sintermetallschicht durchgehend gleicher Zusammensetzung erzielt werden. Natürlich ist es auch möglich, vorgefertigte Sintermetallschichtringe mit eingelagerten Keramikpartikeln in den Tragkörper 1 einzugießen. Je nach Korngröße des Sinterpulvers ist eine mikro- oder makroskopische Materialverteilung in der Schicht 6 erzielbar.

Abweichend zu den vorstehend beschriebenen Ausführungsbeispielen kann die Schicht 6 ihre ganze, axiale Stärke mit im wesentlichen gleichbleibendem Querschnitt durchsetzende, in Aufsicht in zumindest annähernd regelmäßiger Anordnung verteilt angeordnete, erste Abschnitte aus dem Keramikwerkstoff und zwischen diesen und an diese angrenzend zweite Abschnitte 12 aus dem Metall-, Metallsinter- oder dem Metallkeramiksinter-Werkstoff aufweisen, wie die weiteren Figuren 4 bis 12 zeigen.

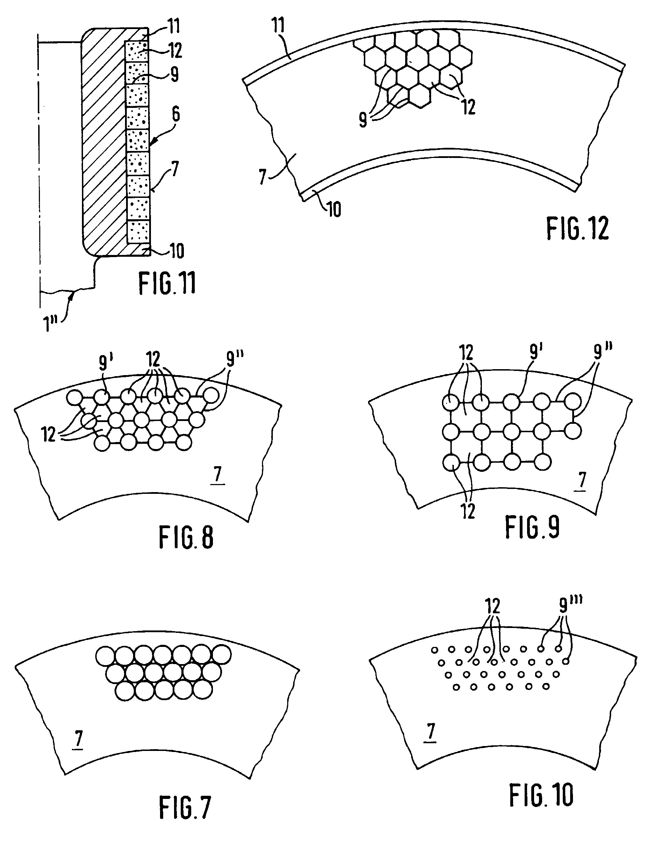

Die Fig. 4 zeigt einen Axialteilschnitt durch eine unbelüftete Bremsscheibe mit einem scheibenartigen Tragkörper 1', der beidseitig mit je einer Schicht 6 versehen ist. Die Fig. 5 zeigt eine Teilaufsicht auf eine teilweise in ihrem Schichtbereich zur Darstellung dessen Struktur aufgeschnittene Bremsscheibe. Die Schichten 6 bestehen gemäß Fig. 4 und 5 aus ersten Abschnitten aus Keramikwerkstoff, welche als Sechseck-Wabenstruktur 9 die ganze axiale Stärke der Schichten 6 durchsetzen, die Keramik-Wandungen der Wabenstruktur 9 stehen rechtwinklig auf der Oberfläche des scheibenartigen Tragkörpers 1' auf. Selbstverstandlich kann anstelle der Sechseck-Wabenstruktur auch eine andere Struktur, beispielsweise aus Dreiecken, in Form von aneinander anschließenden Zylindern gemäß Fig. 7 oder in anderweitiger Form gewählt werden. Es ist auch möglich, die Waben-, Sechseck-, Dreieck- oder Zylinderstruktur wie aus Fig. 8 und 9 ersichtlich aufzulösen, derart, daß die Einzeldreiecke, -sechsecke oder -zylinder 9' sich im Abstand zueinander befinden und durch geradlinig verlaufende Wandungsabschnitte 9'' aus dem Keramikmaterial miteinander verbunden sind. Die Strukturgebilde dieser ersten Abschnitte sind in einfacher Weise als gegebenenfalls unterteilte Ringkörper aus dem Keramikwerkstoff herstellbar. Die Querschnittsflächen der zweiten, sich innerhalb und außerhalb der Dreiecke, Sechsecke bzw Zylinder 9' befindenden Abschnitte sind wenigstens annähernd gleichgroß zu wählen. Gemäß Fig. 10 kann der erste Abschnitt auch aus im Abstand voneinander angeordneten Stiften 9''' aus Keramikmaterial bestehen. Die Maschenweite a (Fig. 5) des ersten Abschnittes, d.h.der Abstand zwischen zwei einander gegenüberstehenden, ersten Abschnitten, entspricht zweckmäßigerweise annähernd dem Abstand von Haarrissen in einer Reibringfläche aus einem keramikfreien Metallgußwerkstoff, sie bzw. er kann im Bereich von ca 5-10mm liegen. Bei dieser Maschenweite ist die Ausbildung von (Haar-)Rissen in der Schicht 6 und deren Reibringfläche begrenz- oder auch ganz unterdrückbar. Die so gebildeten Freiräume im ersten Abschnitt sind durch den Werkstoff des zweiten Abschnittes 12, also mit einem Metall-, Metallsinter- oder Metallkeramiksinter-Werkstoff ausgefüllt, das Ausfüllen kann werkstoffgerecht durch Gießen beim Metallwerkstaff oder Sintern bei den anderen Werkstoffen erfolgen. Bei der Ausführung nach Fig. 4 kann ein Aufgießen oder -sintern auf den Tragkörper 1' erfolgen, wobei zuvor die ein- oder mehrteilig ausgebildete Struktur des ersten Bereiches aufzulegen ist; auch ist ein Eingießen der fertigen Schichten 6 wie vorstehend bereits beschrieben möglich. Bei der Ausführung nach Fig. 6, bei welcher der Werkstoff des Tragkörpers 1' gleich dem Werkstoff des zweiten Abschnittes 12 ist, kann wie vorstehend zum Keramikschwamm bereits beschrieben die den ersten Abschnitt bildende, ein- oder mehrteilige Struktur, beispielsweise Sechseck-Wabenstruktur 9, in die Gießform eingelegt und beim Gießen des Tragkörpers 1' mit dessen Metall ausgefüllt werden. Abschließend kann erfoderlichenfall bei jeder Ausführung ein Fertigschleifen der Reibringflächen 7 erfolgen.

Vorgefertigte Schichten 6 können auch in anderer, geeigneter Weise, beispielsweise (Sinter- oder Reib-)Schweißung auf den Tragkörper aufgebracht werden, es sind hierbei jedoch die Gefahren eines Abplatzens, Abreißens oder Abschmelzens bei hohen Bremsleistungen zu berücksichtigen.

Der Metallsinter- bzw Metallkeramiksinter-Werkstoff kann zur verbesserten Wärmeleitung wie vorstehend zum Metallwerkstoff bereits beschrieben mit einem Anteil eines gut wärmeleitenden Werkstoffes, wie beispielsweise einem Metall, insbesondere Kupfer, versehen werden, um Überhitzungen in den Reibringflächen zu vermeiden.

Die erfindungsgemäßen Schichten sind nicht nur bei beidseitig beaufschlagbaren Bremsscheiben, wie allgemein üblich den Achsbremscheiben, sondern auch bei einseitig beaufschlagbaren Bremsscheiben, wie es bei Radbremsscheiben von Schienenfahzeugen üblich ist, anwendbar.

Bei allen vorstehend beschriebenen Ausführungsformen ist eine Abwandlung möglich, wie sie in den Fig. 11 und 12 in Abwandlung zur Fig. 5 verdeutlicht ist: Der Tragkörper 1'' ist gemäß Fig. 11 und 12 je Schicht 6 mit einer Ringnut versehen, so daß die sich in dieser Ringnut befindende Schicht 6 radialinnen und radialaußen an je einen Ringsteg 10 bzw 11 des Tragkörpers 1'' anschließt. Durch diese Ausbildung kann die Stabilität der Halterung der Schicht 6 verbessert werden und auf dem Tragkörper 1'' erfolgende Aufgieß- und Aufsintervorgänge werden erleichtert, zudem kann in jedem Fall die Unwucht der Bremsscheibe bereits vor einem evtl. erforderlichen Auswuchten relativ niedrig gehalten werden.

Die nach der Erfindung ausgebildeten Bremsscheiben können somit mit im wesentlichen folgenden, vorteilhaften Eigenschaften ausgebildet werden:
- Hohe Temperaturbeständigkeit bis nahe des Schmelzpunktes der für den Tragkörper 1,1',1'' bzw. in der Schicht 6 verwendeten Metalle;
- wobei diese Metalle unterschiedlich sein können;
- eine gute Wärmeableitung von der Reibringfläche 7 zum Bremsscheiben- Inneren;
- höchstens geringe Reibwertschwankungen;
- stark verringerte Rißneigung, insbesondere auch außerhalb der Schicht 6;
- kein Schrumpfen infolge von Plastifizierungen in der Ringfläche 7;
- geringe Reibringdeformationen, da sich in der Reibringfläche 7 höchstens geringe Zugspannungenaufbauen können;
- damit keine Verwerfungen bzw. bleibende Deformationen im Bereich des Reibringes bzw. der Reibringfläche 7;
- geringer Verschleiß bei üblicher Verschleißstärke, damit sehr hohe Nutzungszeiten;
- einfache, billige Herstellungsmöglichkeiten.

### Kurzfassung:

Die Bremsscheibe für Scheibenbremsen weist einen metallischen Tragkörper (1) auf, welcher je Reibringfläche (7) mit einer Schicht (6) versehen ist, die aus mikro- oder makroskopisch aufgegliederten Bereichen aus wenigstens zwei unterschiedlichen Werkstoffen gebildet ist: Die Bereiche des einen Werkstoffes bestehen aus einem zumindest annähernd reinen Keramikwerkstoff und der bzw. die Bereiche des bzw. der anderen Werkstoffe aus einem Metall-, Metallsinter- oder einem Metallkeramiksinter-Werkstoff. Besonders vorteilhaft kann die Schicht (6) aus einem offenporigen Keramikschwamm gebildet sein, dessen Poren mit dem anderen Werkstoff ausgefüllt sind, oder der eine Werkstoff kann in einer regelmäßigen Struktur, z.B. Wabenstruktur angeordnet sein, wobei der andere Werkstoff die Freiräume der Struktur ausfüllt.

Die Bremsscheibe ist insbesondere als Wellen- oder Achsbremsscheibe von Schienenfahrzeugen verwendbar.

### Bezugszeichenliste

- 1, 1', 1'': Tragkörper
- 2: Ringabschnitt
- 3: Ventilationsrippe
- 4: Haltesteg
- 5: Verschraubung
- 6: Schicht
- 7: Reibringfläche
- 8: Bremsbacke
- 9: Sechseck-Wabenstruktur
- 9': Einzelzylinder
- 9'': Wandungsabschnitt
- 9''': Stift
- 10: Ringsteg
- 11: Ringsteg
- 12: zweiter Abschnitt
- a: Stärke
- s: Maschenweite

## Patentansprüche

1. Bremsscheibe für Scheibenbremsen, insbesondere Achs- oder Radbremsscheibe von Schienenfahrzeugen, mit einem ringförmigen Tragkörper (1, 1', 1''), auf welchem sich ein- oder beidseitig eine einen Keramikwerkstoff aufweisende, ringförmige Schicht (6) befindet, deren äußere Ringfläche eine Reibringfläche (7) für wenigstens eine Bremsbacke (8) bildet, dadurch gekennzeichnet, daß die Schicht (6) aus Bereichen aus wenigstens zwei unterschiedlichen Werkstoffen gebildet ist, wobei die Bereiche des einen Werkstoffes aus Keramikwerkstoff und die Bereiche des bzw. der anderen Werkstoffes bzw. Werkstoffe aus einem Metall-, Metallsinter- oder Metallkeramiksinter-Werkstoff bestehen.

2. Bremsscheibe nach Anspruch 1, dadurch gekennzeichnet, daß der Tragkörper (1,1', 1'') aus einem metallischen Werkstoff besteht.

3. Bremsscheibe nach Anspruch 1 und 2, dadurch gekennzeichnet, daß die axiale Stärke (s) der Schicht (6) zumindest der Verschleißstärke der Bremsscheibe je Reibringfläche (7) entspricht.

4. Bremsscheibe nach Anspruch 3, dadurch gekennzeichnet, daß die axiale Stärke (s) der Schicht (6) im Bereich von ca. 5 bis 10 mm liegt.

5. Bremsscheibe nach Anspruch 1, 2 und 3 oder 4, dadurch gekennzeichnet, daß die Schicht (6) aus einem offenporigen Keramikschwamm mit Metallfüllung besteht (Fig. 2).

6. Bremsscheibe nach Anspruch 5, dadurch gekennzeichnet, daß der Tragkörper (1) und die Metallfüllung aus dem gleichen Metallwerkstoff bestehen.

7. Bremsscheibe nach Anspruch 1, dadurch gekennzeichnet, daß der Tragkörper und die Schicht aus dem gleichen Material bestehen.

8. Bremsscheibe nach Anspruch 7, dadurch gekennzeichnet, daß der Tragkörper und die Schicht aus einem offenporigen Keramikschwamm mit Metallfüllung bestehen.

9. Bremsscheibe nach Anspruch 1, 2 und 3 oder 4, dadurch gekennzeichnet, daß die Schicht (6) aus einer Metallsinterschicht mit eingelagerten Keramikpartikeln besteht (Fig. 3).

10. Bremsscheibe nach Anspruch 9, dadurch gekennzeichnet, daß die Metallsinterschicht auf den Tragkörper (1) aufgesintert ist.

11. Bremsscheibe nach Anspruch 1, 2 und 3 oder 4, dadurch gekennzeichnet, daß die Schicht (6) ihre ganze, axiale Stärke (s) mit im wesentlichen gleichbleibendem Querschnitt durchsetzende, in Aufsicht in zumindest annähernd regelmäßiger Anordnung verteilt angeordnete, erste Abschnitte aus dem Keramikwerkstoff und zwischen diesen und an diese angrenzend zweite Abschnitte (12) aus dem Metall-, Metallsinter- oder dem Metallkeramiksinter- Werkstoff aufweist (Fig. 5, 7-10, 12).

12. Bremsscheibe nach Anspruch 11, dadurch gekennzeichnet, daß die ersten Abschnitte eine Maschenweite (a), d. h. einen Abstand zwischen zwei einander gegenüberstehenden, ersten Abschnitten aufweisen, der annähernd dem Abstand von Haarrissen in einer Reibringfläche aus einem keramikfreien Metallgußwerkstoff entspricht.

13. Bremsscheibe nach Anspruch 12, dadurch gekennzeichnet, daß die Maschenweite (a) ca. 5 bis 10 mm beträgt.

14. Bremsscheibe nach Anspruch 11, 12 oder 13, dadurch gekennzeichnet, daß der erste Abschnitt in einer Wabenstruktur ausgebildet ist (Fig. 5, 7-9, 12).

15. Bremsscheibe nach Anspruch 14, dadurch gekennzeichnet, daß die Wabenstruktur aus Drei- oder Sechsecken (9) gebildet ist (Fig. 5, 12).

16. Bremsscheibe nach Anspruch 14, dadurch gekennzeichnet, daß die Wabenstruktur aus Zylindern gebildet ist (Fig. 7-9).

17. Bremsscheibe nach Anspruch 15 oder 16, dadurch gekennzeichnet, daß die Drei- oder Sechsecke bzw. Zylinder aneinander angrenzen (Fig. 5, 7, 12).

18. Bremsscheibe nach Anspruch 15 oder 16, dadurch gekennzeichnet, daß die Drei- oder Sechsecke bzw. Zylinder (9') sich im Abstand voneinander befinden und durch geradlinig verlaufende Wandungsabschnitte (9'') miteinander verbunden sind (Fig. 8, 9).

19. Bremsscheibe nach Anspruch 18, dadurch gekennzeichnet, daß die Querschnittsflächen der zweiten, innerhalb und außerhalb der Drei- oder Sechsecke bzw. Zylinder befindlichen Abschnitte (12) zumindest annähernd gleich groß sind.

20. Bremsscheibe nach Anspruch 11, 12 oder 13, dadurch gekennzeichnet, daß der erste Abschnitt aus im Abstand voneinander angeordneten Stiften (9''') besteht (Fig. 10).

21. Bremsscheibe nach einem oder mehreren der vorstehenden Ansprüche, dadurch gekennzeichnet, daß der erste Abschnitt in den Tragkörper (1') eingegossen ist (Fig. 6).

22. Bremsscheibe nach einem oder mehreren der vorstehenden Ansprüche, dadurch gekennzeichnet, daß die ringförmige Schicht (6) sich in einer Ringnut des Tragkörpers (1'') befindet, derart, daß sie radialaußen und radialinnen an je einen Ringsteg (10, 11) des Tragkörpers (1'') anschließt (Fig. 11, 12).

23. Bremsscheibe nach einem oder mehreren der vorstehenden Ansprüche, dadurch gekennzeichnet, daß der Tragkörper (1, 1', 1'') aus einem üblichen Stahl-, Gußeiseninsbesondere gegebenfalls Kugelgraphit aufweisenden Grauguß- oder einem Aluminiumwerkstoff besteht.

24. Bremsscheibe nach einem oder mehreren der vorstehenden Ansprüche, dadurch gekennzeichnet, daß bei Verwendung eines Sinterwerkstoffes als anderen Werkstoff dieser einen Anteil aus gut wärmeleitendem Metall, insbesondere Kupfer enthält.

25. Bremsscheibe nach einem oder mehreren der vorstehenden Ansprüche, dadurch gekennzeichnet, daß der Keramikwerkstoff und/oder der Keramikanteil des Metallkeramiksinter-Werkstoffes mehr als 10% Siliziumkarbid enthält.

26. Verfahren zur Herstellung einer Bremsscheibe nach Anspruch 6, dadurch gekennzeichnet, daß in eine um die Stärke der Schicht (6) erweiterte Gießform für den Tragkörper (1) vor dem Gießvorgang je Reibringfläche (7) ein aus offenporigem Keramikschwamm gebildeter Ringkörper (6) eingelegt wird, der beim Gießvorgang des Tragkörpers (1) sich mit dessen Metall füllt.

27. Verfahren zur Herstellung einer Bremsscheibe nach Anspruch 5 oder 6, dadurch gekennzeichnet, daß in eine um die Stärke der Schicht (6) erweiterte Gießform für den Tragkörper (1) vor dem Gießvorgang je Reibringfläche (7) ein Ringkörper aus metallgefülltem Keramikschwamm eingelegt wird, der beim Gießvorgang des Tragkörpers (1) in diesen eingegossen wird.

28. Verfahren zur Herstellung einer Bremsscheibe nach Anspruch 26 oder 27, dadurch gekennzeichnet, daß der Ringkörper aus Keramikschwamm aus mehreren, vorzugsweise gleichartig ausgebildeten Keramikschwammteilen zusammengesetzt ist.

29. Verfahren zur Herstellung einer Bremsscheibe nach Anspruch 21, dadurch gekennzeichnet, daß in eine Gießform für den Tragkörper (1') vor dem Gießvorgang je Reibringfläche (7) der als ein- oder mehrteiligerr Ringkörper ausgebildete, erste Abschnitt eingelegt und beim Gießvorgang zum Bilden des zweiten Abschnittes (12) mit dem Metallwerkstoff ausgegossen wird.

30. Verfahren zur Herstellung einer Bremsscheibe nach den Ansprüchen 11 und 22, dadurch gekennzeichnet, daß die Bereiche aus dem anderen Werkstoff aus einem Metallsinter- oder Metallkeramiksinter-Werkstoff bestehen und daß in die Ringnut des Tragkörpers (1'') eine die ersten Abschnitte bildende Struktur eingelegt, deren Zwischenräume mit dem ungesinterten, pulverförmigen Metallsinter- oder Metallkeramiksinter-Werkstoff aufgefüllt und sodann gesintert und erforderlichenfalls abschließend fertiggeschliffen wird.

## Claims

1. Brake disc for disc brakes, in particular axle or wheel brake disc on rail vehicles, comprising an annular supporting body (1, 1', 1'') on which an annular layer (6) presenting a ceramic material is provided on one or on both sides, with the outer annular surface of said annular layer (6) forming a friction ring surface (7) for at least one brake clip (8), characterised in that said layer (d) is formed by areas of at least two different materials, with the areas of said one material consisting of a ceramic material and with the areas of said other material or materials, respectively, consisting of a metal, sintered metal or sintered metal-ceramic material.

2. Brake disc according to Claim 1, characterised in that said supporting body (1, 1', 1'') consists of a metal material.

3. Brake disc according to Claims 1 and 2, characterised in that the axial thickness (s) of said layer (6) corresponds at least to the thickness of wear of the brake disc per friction ring surface (7).

4. Brake disc according to Claim 3, characterised in that the axial thickness (s) of said layer (6) is within the range from approximately 5 to 10 mm.

5. Brake disc according to Claim 1, 2 and 3 or 4, characterised in that said layer (6) consists of an open-pore ceramic sponge with a metal filling (Fig. 2).

6. Brake disc according to Claim 5, characterised in that said supporting body (1) and said metal filling consist of the same metal material.

7. Brake disc according to Claim 1, characterised in that said supporting body and said layer consist of the same material.

8. Brake disc according to Claim 7, characterised in that said supporting body and said layer consist of an open-pore ceramic sponge with a metal filling.

9. Brake disc according to Claim 1, 2 and 3 or 4, characterised in that said layer (6) consists of a sintered metal layer with ceramic particles embedded thereon (Fig. 3).

10. Brake disc according to Claim 9, characterised in that said sintered metal layer is sintered on said supporting body (1).

11. Brake disc according to Claim 1, 2 and 3 or 4, characterised in that said layer (6) presents all over its axial thickness (2) first sections made of a ceramic material, which pass therethrough at a substantially constant cross-section and which when seen in a plan view are arranged in an at least approximately regular structure, as well as second sections (12) therebetween which are joining said first sections and are made of a metal, a sintered metal or a sintered metal-ceramic material (Figs. 5, 7 - 10, 12).

12. Brake disc according to Claim 11, characterised in that said first sections have a mesh width (a), i.e. a distance between two mutually opposite first sections, which corresponds approximately to the spacing of hairline cracks in a friction ring surface made of a ceramic-free cast metal material.

13. Brake disc according to Claim 12, characterised in that the mesh width (a) amounts to 5 to 10 mm approximately.

14. Brake disc according to Claim 11, 12 or 13, characterised in that said first section is configured in a honeycomb structure (Figs. 5, 7 - 9, 12).

15. Brake disc according to Claim 14, characterised in that said honeycomb structure is formed by triangles or hexagons (9) (Figs. 5, 12).

16. Brake disc according to Claim 14, characterised in that said honeycomb structure is formed by cylinders (Figs. 7 - 9).

17. Brake disc according to Claim 15 or 16, characterised in that said triangles or hexagons or cylinders, respectively, join each other (Figs. 5, 7, 12).

18. Brake disc according to Claim 15 or 16, characterised in that said triangles or hexagons or cylinders, respectively (9') are spaced from each other and are interconnected by straight extending wall sections (9'').

19. Brake disc according to Claim 18, characterised in that the cross-sectional areas of said second sections (12) disposed inside and outside said triangles or hexagons or cylinders, respectively, present at least approximately the same size.

20. Brake disc according to Claim 11, 12 or 13, characterised in that said first section consists of mutually spaced pins (9'') (Fig. 10).

21. Brake disc according to one or several of the foregoing Claims, characterised in that said first section is incorporated into said supporting body (1') by casting (Fig. 6).

22. Brake disc according to one or several of the foregoing Claims, characterised in that said annular layer (6) is located in an annular groove of said supporting body (1'') such that it joins one annular link (10, 11) each of said supporting body (1'') at the radially outward and inward ends (Figs. 11, 12).

23. Brake disc according to one or several of the foregoing Claims, characterised in that said supporting body (1, 1', 1'') consists of a common steel, cast iron, particularly grey cast iron possibly including spheroidal graphite or an aluminium material.

24. Brake disc according to one or several or the foregoing Claims, characterised in that when a sintered material is used as said other material it contains one part in the form of a thermally well conducting metal, copper in particular.

25. Brake disc according to one or several of the foregoing Claims, characterised in that said ceramic material and/or said ceramic share in said sintered metal-ceramic material contains more than 10 % of silicon carbide.

26. Method of manufacturing a brake disc according to Claim 6, characterised in that prior to the casting process one annular body (6) constituted by an openpore ceramic sponge per friction ring surface (7) is inserted into a casting mould for said supporting body (1), which is extended by the thickness of said layer (6), which annular body is filled with the metal of said supporting body (1) during the casting operation.

27. Method of manufacturing a brake disc according to Claim 5 or 6, characterised in that prior to the casting process one annular body (6) constituted by a metal-filled ceramic sponge per friction ring surface (7) is inserted into a casting mould for said supporting body (1), which is extended by the thickness of said layer (6), which ceramic sponge is incorporated into said supporting body (1) during the casting operation.

28. Method of manufacturing a brake disc according to Claim 26 or 27, characterised in that said annular body constituted by a ceramic sponge is composed of several ceramic sponge elements which are preferably configured in the same manner.

29. Method of manufacturing a brake disc according to Claim 21, characterised in that prior to the casting process said first section configured as single- or multi-part annular body per friction ring surface (7) is inserted into a casting mould for said supporting body (1') and is filled with the metal material during the casting operation for forming said second section (12).

30. Method of manufacturing a brake disc according to the Claims 11 and 22, characterised in that said sections made of another material consist of a sintered metal or sintered metal-ceramic material, and that a structure is inserted into the annular groove of said supporting body (1'') for forming said first sections wherein the spaces are filled with the non-sintered powdered metal sinter or metal-ceramic sinter material and are then sintered and finally finished by grinding if necessary.

## Revendications

1. Disque de frein pour freins à disque, en particulier disque de frein monté à l'axe ou sur la roue dans des véhicule sur rails, comprenant corps de support annulaire (1, 1', 1'') sur lequel une couche annulaire (6) à un matériau céramique est disposée d'un ou des deux côtés, à la surface annulaire extérieure de ladite couche annulaire (6) constituant une surface d'anneau de friction (7) pour au moins une mâchoire (8), caractérisée en ce que ladite couche (6) est formée par des parties à au moins deux matériaux différents, aux parties dudit premier matériau étant constituées par un matériau céramique, et aux parties dudit autre matériau ou respectivement aux autres matériaux étant constituées par un matériau métallique, un métal fritté ou un matériau céramique-métallique fritté.

2. Disque de frein selon la revendication 1, caractérisée en ce que ledit corps de support (1, 1', 1'') consiste en un matériau métallique.

3. Disque de frein selon les revendications 1 et 2, caractérisée en ce que l'épaisseur axiale (s) de ladite couche (6) corresponde au moins à l'épaisseur d'usure à la disque de frein par surface d'anneau de friction (7).

4. Disque de frein selon la revendication 3, caractérisée en ce que l'épaisseur axiale (s) de ladite couche (6) se trouve au dedans de la gamme de 5 à 10 mm environ.

5. Disque de frein selon la revendication 1, 2 et 3 o7 4, caractérisée en ce que ladite couche (6) consiste en une éponge céramique à pores ouvertes chargée d'un métal (fig. 2).

6. Disque de frein selon la revendication 5, caractérisée en ce que ledit corps de support (1) et ladite charge métallique consistent en le même matériau métallique.

7. Disque de frein selon la revendication 1, caractérisée en ce que ledit corps de support et ladite couche layer consistent en le même matériau.

8. Disque de frein selon la revendication 7, caractérisée en ce que ledit corps de support et ladite couche consistent en une éponge céramique à pores ouvertes chargée d'un métal.

9. Disque de frein selon la revendication 1, 2 et 3 ou 4, caractérisée en ce que ladite couche (6) consiste en une couche à métal fritté à particules céramiques y encastrées (fig. 3).

10. Disque de frein selon la revendication 9, caractérisée en ce que ladite couche en métal fritté est fritté sur ledite corps de support (1).

11. Disque de frein selon la revendication 1, 2 et 3 ou 4, caractérisée en ce que ladite layer (6) présente sur toute son épaisseur axiale (2) premières sections formées d'un matériau céramique, qui la traversent à une section transversale essentiellement constante et qui, en vue d'en haut, sont disposées en une structure au moins régulaire environ, ainsi que des deuxièmes sections (12) y entre, qui joignent lesdites premières sections et qui sont faites en un métal, un métal fritté ou un matériau métallique-céramique fritté (figs. 5, 7 - 10, 12).

12. Disque de frein selon la revendication 11, caractérisée en ce que lesdites premières sections ont un nombre mesh (a), c.-à-d. une distance entre deux premières sections opposées, qui correpond environ à la distance des fissures capillaires dans une surface d'anneau de friction faite en un matériau métallique coulée sans céramique.

13. Disque de frein selon la revendication 12, caractérisée en ce que le nombre mesh (a) correspond à 5 à 10 mm environ.

14. Disque de frein selon la revendication 11, 12 or 13, caractérisée en ce que ladite première section est configurée à une structure en nid d'abeille (figs. 5, 7 -9, 12).

15. Disque de frein selon la revendication 14, caractérisée en ce que ladite structure en nid d'abeille est formée par des triangles ou hexagones (9) (figs. 5, 12).

16. Disque de frein selon la revendication 14, caractérisée en ce que ladite structure en nid d'abeille est formée par des cylindres (figs. 7 - 9).

17. Disque de frein selon la revendication 15 or 16, caractérisée en ce que lesdites triangles ou hexagones ou respectivement cylindres se joignent l'un à l'autre (figs. 5, 7, 12).

18. Disque de frein selon la revendication 15 or 16, caractérisée en ce que lesdits triangles ou hexagones ou respectivement cylindres (9') sont écartés l'un de l'autre et sont reliés l'un à l'autre moyennant des sections de paroi rectilignes (9'').

19. Disque de frein selon la revendication 18, caractérisée en ce que les parties de section transversale desdites deuxièmes sections (12), qui sont disposées à l'intérieur et à l'extérieur desdits triangles ou hexagones ou respectivement cylindres, présentent au moins la même grandeur environ.

20. Disque de frein selon la revendication 11, 12 or 13, caractérisée en ce que ladite première section consiste en broches écartées l'une de l'autre (9'') (fig. 10).

21. Disque de frein selon une ou plusieurs des revendications précédentes, caractérisée en ce que ladite première section est incorporée par coulée dans ledite corps de support (1') (fig. 6).

22. Disque de frein selon une ou plusieurs des revendications précédentes, caractérisée en ce que ladite couche annulaire (6) se trouve dans une rainure annulaire dudit corps de support (1'') de façon qu'elle joigne une entretoie annulaire respective (10, 11) dudit corps de support (1'') aux extrémités radialement extérieure et intérieure (figs. 11, 12).

23. Disque de frein selon une ou plusieurs des revendications précédentes, caractérisée en ce que ledit corps de support (1, 1', 1'') consiste en un acier commun, une fonte de fer, en particulier fonte grise éventuellement à graphite sphéroïdal, ou un matériau en aluminium.

24. Disque de frein selon une ou plusieurs des revendications précédentes, caractérisée en ce que au cas d'utilisation d'un matériau fritté comme ledit autre matérau, il contient une partie sous la forme d'un métal à bonne transmission thermique, en particulier de cuivre.

25. Disque de frein selon une ou plusieurs des revendications précédentes, caractérisée en ce que ledit matériau céramique et/ou ladite partie céramique dans ledit matériau métallique-céramique fritté contient plus de 10% de carbure de silicium.

26. Procédé à produire a Disque de frein selon la revendication 6, caractérisée en ce que prior to the casting process one annular body (6) constituted by an open-pore ceramic sponge per surface d'anneau de friction (7) is inserted into a casting mould for said corps de support (1), which is extended by the thickness of said layer (6), which annular body is filled with the metal of said corps de support (1) during the casting operation.

27. Procédé à produire une disque de frein selon la revendication 5 ou 6, caractérisé en ce qu'avant l'opération de coulée, un corps annulaire (6) formé par une éponge céramique chargée d'un métal, par surface d'anneau de friction (7), est inserée dans une moule de coulée pour ledit corps de support (1), qui est élargie par l'épaisseur de ladite couche (6), laquelle éponge céramique est incorporée dans ledit corps de support (1) au cours de l'opération de coulée.

28. Procédé à produire une disque de frein selon la revendication 26 ou 27, caractérisé en ce que ledit corps annulaire formé par une éponge céramique est composé par une pluralité des éléments d'éponge céramique qui sont configurés de la même façon de préférence.

29. Procédé à produire une disque de frein selon la revendication 21, caractérisé en ce qu'avant l'opération de coulée de ladite première section configurée sous forme d'un corps à une seule partie ou à plusieurs parties par surface d'anneau de friction (7) est insérée dans une moule de coulée pour ledit corps de support (1') et est remplie du matériau métallique pendant l'opération de coulée pour la formation de ladite deuxième section (12).

30. Procédé à produire une disque de frein selon les revendications 11 et 22, caractérisé en ce que lesdites sections faites en un autre matériau consistent en un métal fritté ou un matériau métallique-céramique fritté, et en ce qu'une structure est insérée dans une rainure annulaire dudit corps de support (1'') afin de former lesdites premières sections dans lesquelles les espaces sont remplis avec ledit matériau non-fritté en poudre de métal à fritter ou en métal-céramique à fritter, et sont ensuite frittées et eventuellement finalement rectifiées en fin.
